# EUROPEAN PATENT APPLICATION

(11) **EP 2 810 809 A1**
(43) Date of publication of application: **10.12.2014**
(21) Application number: 13171042.8
(22) Date of filing: 07.06.2013
(51) Int. Cl.: B60L 1/00, B60L 3/00, B60L 3/04, B60L 9/04, B60L 11/00, B60L 11/18, B60L 9/24

(54) **Mining vehicle and method for its energy supply**

(71) Applicant: Sandvik Mining and Construction Oy, 33330 Tampere (FI)
(72) Inventor: Kouhia, Samuli, 33330 Tampere (FI); Kouvo, Mikko, 33330 Tampere (FI)
(74) Representative: Smolander, Jouni Juhani

(57) **Abstract**

The invention relates to a mining vehicle (1) and to a method for its energy supply. The mining vehicle (1) has a carriage (3), driving equipment (4) for moving the carriage (3) and at least one mining work device (2). The mining vehicle (1) has a connection (23) for supplying the mining work device (2) from the electrical network (20) of the mine (18) and an energy source (25) for supplying energy to the driving equipment (4). The energy source (25) is charged by using a generator (33), and the mechanical energy arranged to rotate the generator (33) is obtained from the electrical network (20) of the mine (18), whereby the electric energy from the electrical network (20) of the mine (18) is transformed into mechanical energy, which is arranged to rotate the generator (33).

## Description

### BACKGROUND OF THE INVENTION

The invention relates to a mining vehicle and to a method for the energy supply of a mining vehicle.

In mines, rock drilling rigs and other mining vehicles are used to perform operations according to the work cycles of the mining work devices at pre-planned work sites. After the necessary tasks, according to the work cycle, such as borehole drilling, have been performed, the mining vehicle is moved to the next work site and a new work cycle is started. In underground mines, in particular, mining vehicles are generally used in which the driving energy for the operations according to the work cycles is electricity from an electrical network of the mine. By contrast, transfer drives between work sites are performed by means of driving energy obtained by using a combustion engine, typically diesel engine, whereby electric cables or the like do not restrict the transfer drives. However, exhaust gases and noise from a combustion engine cause problems in mines. In addition, a combustion engine requires a lot of space on the carriage of the vehicle, and necessitates regular maintenance. A combustion engine also has adverse effects on the fire safety of the mine, since it has hot surfaces and it is also necessary to store and handle flammable fuel in the vehicle and mine.

Mining vehicles that are continuously connected to the electrical network of the mine are also used in mines. The mining vehicles then have an electric motor, and typically an electric motor with a constant rotation speed is used. The power required by the work phase may then be adjusted with hydraulic components, and the electric motor obtains the electric current and load power defined by the energy consumption of the work phase from the electrical network of the mine. Further, the movement of the mining vehicle is then typically bound to the electrical network or at least to a cable connected thereto and coiled in the mining vehicle or at the fixed electrical network.

Publication US 7 053 568, for example, presents a battery-driven mining vehicle. The publication describes, in particular, the use and positioning of a battery and alternating current motors as components of drive transmission.

Publication US 5 293 947 presents a mining vehicle that receives its electric supply from an overhead busbar system. The mining vehicle also has a switch for selecting whether the energy used by the mining vehicle is taken from the electrical network or from an auxiliary energy source, such as battery or diesel motor, in the mining vehicle. When the energy is taken from the auxiliary energy source, the mining vehicle can be moved short distances without connecting the mining vehicle to the overhead electrical network.

Application WO 2010/061058 discloses a mining vehicle which is connected to an external electrical network at a work site. An energy storage of the vehicle is charged during the work cycle defined by an excavation plan, when the vehicle is at the work site. After this work cycle is done, electricity obtained from the energy storage is used in a transfer drive.

### BRIEF DESCRIPTION OF THE INVENTION

It is an object of the present invention to provide a new type of mining vehicle and a method for its energy supply.

The invention is characterised by the features of the independent claims. Embodiments of the invention are presented in the dependent claims.

In the presented solution a mining vehicle has a carriage, driving equipment for moving the carriage and at least one mining work device. The mining vehicle further has a connection for supplying the mining work device from an electrical network of the mine and an energy source for supplying energy to the driving equipment. The energy source is charged by using a generator, and the mechanical energy arranged to rotate the generator is obtained from the electrical network of the mine, whereby the electric energy from the electrical network of the mine is transformed into mechanical energy, which is arranged to rotate the generator. This provides an electrical isolation between the electrical network of the mine and the generator, whereby an isolation transformer or any other electric means for performing a galvanic isolation is avoided. Thus, the number of components used in the mining vehicle can be minimized. Furthermore, the voltage of the mining work device must be adapted to conform to the voltage of the electrical network of the mine. As for the voltages of the generator and the energy source, it is sufficient that they conform to each other; their voltages do not have to be adapted to conform to the voltage of the electrical network of the mine.

In an embodiment, the energy from the electrical network of the mine is first transformed into kinetic energy, the kinetic energy is transformed into pressure energy and the pressure energy is thereafter transformed into kinetic energy to rotate the generator. The mining vehicle may comprise a hydraulic system for the pressure energy. The hydraulic system drives the mining work device and may also be connected to the driving equipment. The mining vehicle may comprise a hydraulic pump that is supplied from the energy source, and this hydraulic pump may be used as a hydraulic motor for rotating the generator for charging the energy source.

According to an embodiment, during full power drilling, energy is supplied to the mining work device both from the electrical network of the mine and from the energy source of the mining vehicle.

According to another embodiment, an electrical motor supplied from the electrical network of the mine and providing the hydraulic pressure for the mining work device and the electrical motor supplied from the energy source are provided with means for determining their temperature, whereby the motors are used for supplying the maximum power until their maximum temperature is reached. When the maximum temperature has been reached, their power is lowered to prevent the exceed of their maximum temperature.

According to another embodiment, during charging, the mining vehicle is connected to the electrical network of the mine and it does not move.

The mining vehicle comprises one or more of the following mining work devices: a rock drilling machine, bolting machine, shotcreting device, scaling device, injection device, blasthole charger, measuring device, or drilling, sealing and propellant feeding equipment used in small-charge excavation. The rock drilling machine may be a face drilling device, or a device used in production hole drilling, that is a long-hole drilling device that drills boreholes in fan shape. The mining work device is an actuator used in handling undetached rock and performs several consecutive operations according to a given work cycle. Typically, several similar operations are done with the mining work device at one work site. These operations may be defined in an excavation plan, such as a drilling plan, charging plan, or corresponding mining plan. The mining work device is normally arranged on a boom with which the device is moved during the work cycle. On the other hand, the mining work device may be arranged on a corresponding support or support structure in a mining vehicle, which supports the device during its work cycle.

### BRIEF DESCRIPTION OF THE FIGURES

Some embodiments of the invention will be described in more detail in the attached drawings, in which
Figure 1 is a schematic side representation of a mining vehicle, in this case a rock drilling rig, and
Figure 2 is a diagram of an energy supply arrangement of a mining vehicle.

In the figures, some embodiments of the invention are shown simplified for the sake of clarity. Similar parts are marked with the same reference numbers in the figures.

### DETAILED DESCRIPTION OF THE INVENTION

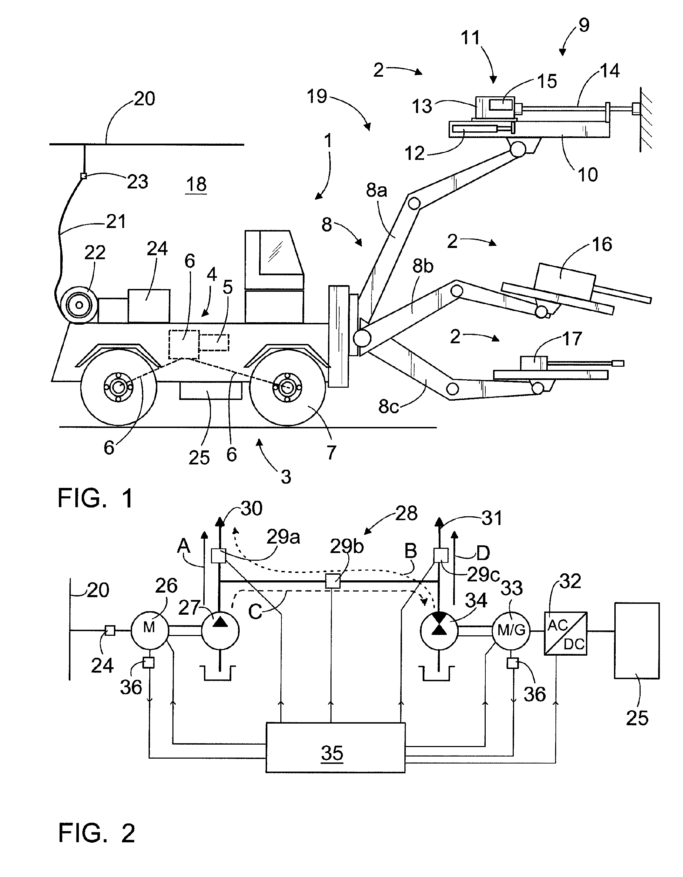

Figure 1 shows a rock drilling rig that is one example of a mining vehicle 1 equipped with one or more mining work devices 2. The rock drilling rig comprises a carriage 3 that may be moved by means of drive equipment 4. The drive equipment 4 comprises one or more drive motors 5 and one or more power transmission means 6 for transmitting drive power to one or more wheels 7. The drive power transmission may comprise a mechanical gear system and mechanical power transmission members or, alternatively, the drive power transmission may be hydraulic or electric. There may be one or more booms 8 arranged on the carriage 3, and the boom may be equipped with a mining work device 2. In the embodiment shown in Figure 1, the first boom 8a is a drilling boom, at the outermost end of which there is a rock drilling unit 9 comprising a feed beam 10, along which a rock drilling machine 11 can be moved by means of a feed device 12. The rock drilling machine 11 may comprise a percussion device 13 for generating impact pulses on a tool and a rotating device 15 for rotating the tool 14 around its longitudinal axis. There may be several of these drilling booms 8a in the rock drilling rigs. By way of example, a second boom 8b is shown to comprise a bolting device 16, with which rock bolts can be arranged in pre-drilled boreholes to support the excavated rock cavern. In the embodiment of Figure 1, a third boom 8c is equipped with a measuring device 17 for measuring drilled boreholes. Other alternative mining work devices 2 include injection devices used in feeding sealing material into rock, shotcrete processing device, scaling equipment, devices used in small-charge excavation, and devices for feeding explosives.

The mining vehicle 1 is run in accordance with the excavation plan of the mine 18, or a corresponding plan drafted in advance, to a work site 19 where the mining work device 2 performs operations according to the work cycle, the performance of which takes a relatively long time. For instance, the work cycle of a rock drilling machine may include drilling several boreholes defined in the drilling plan at the work site 19. Further, the drilling of each borehole typically consists of several work phases, such as collaring, actual drilling, changing extension rods and drill bits, and dismantling extension rod equipment after drilling. Performing a drilling work cycle at a work site 19 may take several hours, sometimes even an entire work shift. Correspondingly, charging, bolting, measuring, and injecting are often quite time-consuming operations. Generally, the use of a mining work device 2 has to do with drilling a borehole or further processing a finished hole. This then means handling undetached rock.

Figure 1 further shows that the mine 18 has an electrical network 20 that may be fixedly constructed, or it may consist of a modifiable network. The electrical network 20 is typically a three-phase alternating current network. When the mining vehicle 1 is at the work site 19, its mining work device 2, hydraulic system and any necessary auxiliary systems are driven mainly by electrical energy obtained from an external electrical network. The mining vehicle 1 may be connected to the electrical network 20 with one or more connection cables 21. The connection cable 21 may be arranged on a reel 22 and it may be equipped with a suitable connector 23 that may be connected to the supply terminal of the electrical network 20. Alternatively, the reel 22 and cable 21 may be arranged in the mine 18, and the connection cable 21 is connected to the mining vehicle 1. The mining vehicle 1 is equipped with a connecting device 24, through which the electricity supplied from the electrical network 20 is connected to different devices of the mining vehicle 1.

The mining vehicle 1 is also equipped with at least one energy source 25. The energy source 25 may be a battery, a supercapacitor or their combination, for example, or any other suitable energy source that may be charged by a generator.

Figure 2 shows very schematically some parts of the mining vehicle.

An electric motor 26 is connected to the electrical network 20. The electric motor 26 rotates a hydraulic pump 27.

Figure 2 schematically shows the channels of the hydraulic system 28. The hydraulic system 28 is shown in a simplified manner, as are valves 29a - 29c. Naturally, the hydraulic system may be more complicated and instead or in addition to the valves 29a - 29c, the hydraulic system 28 may comprise other valves such as three-way valves or four-way valves etc.

Reference numeral 30 denotes supplying hydraulic pressure to a mining work device 2. Correspondingly, reference numeral 31 denotes supplying hydraulic pressure to a hydraulic system of the driving equipment, such as steering and braking.

When a mining work device 2 is used, the electric motor 26 rotates the hydraulic pump 27 which provides hydraulic pressure. The valve 29a is open and the valve 29b is closed such that hydraulic pressure is supplied as denoted by arrow A.

The energy source 25 is connected by an inverter 32 to an electric motor 33. The electric motor 33 rotates a hydraulic pump 34. For example during full power drilling, it is possible to supply energy also from the energy source 25 to the mining work device 2, whereby a boost mode is achieved. In that case, the valve 29c is closed and the valves 29b and 29a are open, whereby the hydraulic pressure is supplied as denoted with arrows A and B.

During the boost mode, the load of the electric motor 26 may be lowered by simultaneously supplying energy to the mining work device by rotating also the electric motor 33, or both electric motors 26 and 33 are loaded in order to supply even more than a normal amount of energy to the mining work device.

When the power requirement of the mining work device 2 during the work cycle is low, it is possible to supply the hydraulic pressure according to arrow C in Figure 2. This stage may be called a charging mode. During the charging mode, the valve 29b is open and the valves 29a and 29c may be closed. During the charging mode, the valve 29a may also be open, whereby hydraulic pressure is supplied as denoted with arrows C and A.

At this stage, the hydraulic pressure is used for rotating the hydraulic pump 34, which thereby acts as a hydraulic motor. In that case, the hydraulic pump 34 may be a gear pump which can act as a hydraulic motor. The hydraulic pump 34 rotates the electric motor 33, which thereby acts as a generator. An electric motor 33 acting as a generator charges the energy source 25 through the inverter 32.

The valves may be on-off valves and correspondingly one or more of the valves may be proportional valves. In one embodiment, at least the valve 28b is a proportional valve. This embodiment provides the feature that during the boost mode or during the charging mode, for example, the hydraulic flow may be easily controlled. In another embodiment, the valves 29a and 29b are proportional valves, and in a further embodiment, all the valves are proportional valves. Proportional valves provide more versatile control systems.

Instead of a gear pump, it is possible to use a separate hydraulic pump for providing hydraulic pressure and a separate hydraulic motor for rotating the electric motor 33 with hydraulic pressure obtained from the hydraulic system 28. It is also possible to use a separate electric motor for rotating the hydraulic pump and a separate generator for charging the energy source 25.

Correspondingly, instead of the shown electric motor 26 and the hydraulic pump 27, it is possible to use a separate or specific hydraulic pump for providing a hydraulic pressure for charging the energy source 25, and a separate electric motor for rotating this hydraulic pump.

The hydraulic pumps may be fixed or variable pumps. As discussed above, the hydraulic pump 34 may be a gear pump. The hydraulic pump 34 may as well be a piston pump. Also other pump types are possible.

During the driving mode, energy is supplied from the energy source 25 to the driving equipment. During driving the mode, the valve 29c is open and the valve 29b is closed. Thus, the hydraulic pressure is supplied as denoted with arrow D.

The system may also be provided such that the generator 33 is rotated by a pneumatic motor. Pressurized air may be supplied to the pneumatic motor from a compressor or even from a pneumatic system of the mine.

It is also possible to provide the generator 33 on the same shaft as the electric motor 26, whereby the electric motor 26 and the generator 33 are mechanically connected. Thereby, the electric motor 26 of the hydraulic power pack directly rotates the generator 33.

However, by using the hydraulic system between the connection for supplying the mining work device from the electrical network of the mine and the generator 33 for supplying electric energy from the electrical network of the mine for rotating the generator 33, the need for additional components is minimized.

Figure 2 also schematically shows a control unit 35 that controls the equipment of the mining vehicle 1. The electric motor 26 and, correspondingly, the electric motor 33 may be provided with temperature sensors 36 that determine the temperature of the electric motors 26 and 33. The temperatures of the electric motors 26 and 33 are supplied to the control unit 35 and thereby the control unit 35 is used for controlling the electric motors 26 and 33 such that they are used for supplying the maximum power until their maximum temperature is reached. When the maximum temperature has been reached, their power is lowered to prevent the exceed of their maximum temperature.

In the described system, the co-efficient of efficiency of the electric motors 26 and 33 may be controlled to be on a high level by using the control unit 35.

The described system provides the possibility for rapid charge. For rapid charge the electric motor per generator 33 is preferably a high-speed motor that is able to exceed 5 000 rounds per minute. During rapid charge, for example, the control unit 35 controls the motors 26 and 33 such that they are used for supplying the maximum power until their maximum temperature is reached.

Proportional valves can be controlled by the control unit 35 to achieve a desired amount of oil flow to different circuits of the hydraulic system. It is also possible to control the angle of the variable pump. Then the pump will deliver only the amount of flow that is needed.

All in all, the described system provides good dynamics for the charge. Furthermore, the control of the system is rather simple.

The solutions described in this specification may also be used when excavating tunnels. Tunnels are excavated in rounds. The work site is the face of the tunnel where boreholes are drilled and charged. Before the round is exploded, the rock drilling rig is moved away from the face to a safe point. After the explosion and after the exploded rock has been removed, the rock drilling rig is driven from the safe point back to the face of the tunnel to drill another round. Tunnels are excavated in rounds, which means that a new drilling site, that is new work site, is at a distance corresponding to the length of the round from the previous drilling site, that is previous work site. The transfer drive is then from the previous work site via the safe point to the next work site.

It should be mentioned that in this specification, a mine refers to underground mines and opencast mines. Further, the method and mining vehicle may be used at contract work sites, for example when excavating different rock facilities. Therefore, a contract work site may also be considered a type of mine. At contract work sites, an external electrical network may be modifiable, such as an aggregate on a movable carriage.

In some cases, the features described in this specification may be used as such, regardless of other features. On the other hand, the features described in this specification may also be combined to provide various combinations as necessary.

The drawings and the related description are only intended to illustrate the idea of the invention. The invention may vary in its details within the scope of the claims.

## Claims

1. A mining vehicle having
a carriage,
driving equipment for moving the carriage,
at least one mining work device,
a connection for supplying the mining work device from the electrical network of the mine,
an energy source for supplying energy to the driving equipment,
a generator for charging the energy source and
means for transforming electric energy into mechanical energy, whereby electric energy from the electrical network of the mine is transformed into mechanical energy and arranged to rotate the generator.

2. A mining vehicle as claimed in claim 1, comprising means for transforming electric energy into kinetic energy, means for transforming kinetic energy into pressure energy and means for transforming the pressure energy again into kinetic energy to rotate the generator.

3. A mining vehicle as claimed in claim 1 or 2, comprising a hydraulic system between said connection and the generator for supplying electric energy from the electrical network of the mine for rotating the generator.

4. A mining vehicle as claimed in claim 2 or 3, wherein the means for transforming pressure energy into kinetic energy comprises a hydraulic pump that is supplied from the energy source, and the hydraulic pump is used as a hydraulic motor for rotating the generator for charging the energy source.

5. A mining vehicle as claimed in claim 4, wherein the hydraulic pump is a gear pump.

6. A mining vehicle as claimed in claim 4, wherein the hydraulic pump is a piston pump.

7. A mining vehicle as claimed in any one of the preceeding claims, wherein the generator is a high-speed motor for providing rapid charge for the energy source.

8. A method for the energy supply of a mining vehicle, the method comprising charging an energy source of a mining vehicle, and the mining vehicle comprising a carriage, driving equipment for moving the carriage, at least one mining work device, a connection for supplying the mining work device from the electrical network of the mine, the energy source for supplying energy to the driving equipment and a generator for charging the energy source, whereby the method comprises transforming electric energy supplied from the electrical network of the mine into mechanical energy and arranging the mechanical energy to rotate the generator.

9. A method as claimed in claim 8, comprising transforming electric energy from the electrical network of the mine into kinetic energy, transforming the kinetic energy into pressure energy, transforming the pressure energy again into kinetic energy and arranging the kinetic energy to rotate the generator.

10. A method as claimed in claim 8 or 9, wherein the energy source is charged by using rapid charge such that during rapid charge the temperature of at least one charging device is measured and the device is controlled to supply its maximum power until its maximum temperature is reached.
